# EUROPÄISCHE PATENTANMELDUNG

(11) **EP 3 756 791 A1**
(43) Veröffentlichungstag der Anmeldung: **30.12.2020**
(21) Anmeldenummer: 19181935.8
(22) Anmeldetag: 24.06.2019
(51) Int. Cl.: B22F 3/105, B23K 26/342, B29C 64/386, G01J 5/00, G01J 5/52, B33Y 50/00

(54) **MESSGERÄT UND KALIBRIERVERFAHREN ZUR QUALITÄTSSICHERUNG UND STANDARDISIERUNG IN ADDITIVEN FERTIGUNGSPROZESSEN**

(71) Anmelder: ThetaScan GmbH, 46535 Dinslaken (DE)
(72) Erfinder: Carl, Volker, 46535 Dinslaken (DE)
(74) Vertreter: Meinke, Jochen

(57) **Zusammenfassung**

Die Erfindung betrifft Verbesserungen in additiven Fertigungsprozessen, insbesondere hinsichtlich der Prozesssicherheit, der Qualität des Fertigungsprozesses, Anlagenvergleichbarkeit und Standardisierung. Hierzu wird unter Einsatz einer zu einem Messsystem umgebauten CCD-Kamera, bei der nur der Nahinfrarotbereich benutzt wird, und die eine Langzeitbelichtungsfunktion aufweist, innerhalb eines Temperaturbereichs von 800° C bis 1500° C die Kennlinie an einem schwarzen Strahler erfasst. Ersatzweise kann auch eine Halogenlampe mit einer möglichst großen Wendel verwendet werden, deren Helligkeit so lange verändert wird, bis die gemessene Strahlung der des schwarzen Strahlers entspricht.

## Beschreibung

Die vorliegende Erfindung betrifft Verbesserungen in additiven Fertigungsprozessen, insbesondere bzgl. der Prozesssicherheit, der Qualität des Fertigungsprozesses, der Anlagenvergleichbarkeit und Standardisierung.

Insbesondere betrifft sie ein Messgerät und Kalibrierverfahren für dieses Messgerät zur Qualitätssicherung und Standardisierung in additiven Fertigungsprozessen (3D Printing).

Insbesondere geht es um die Prozesssicherheit und die Qualität des Fertigungsprozesses von additiv gefertigten metallischen Bauteilen.

Pulverförmige Metalle werden mittels des selektiven Laserstrahlschmelzens (SLM) verarbeitet. Derartige pulverförmige Materialien werden in einem Vakuumschmelzprozess hergestellt, bei denen ein flüssiges Metall in ein Vakuum entlassen und dann feinverdüst wird. Die Partikelgrößenverteilung liegt nach einem Siebprozess meist zwischen 15 und 45 Mikrometer vor. Das gewonnene Material wird auf eine sich stetig absenkende Plattform mittels eines Rakels, eines Wischers oder einer Klinge aufgetragen und anschließend von einem Laserstrahl belichtet. Die Laserleistungen liegen bei etwa 100 Watt bei kleineren Anlagen und über 2.000 Watt bei größeren Maschinen. Das Bauteil entsteht schichtweise auf der sich schrittweise absenkenden Bauplattform. Die Bauteile entstehen in der Orientierung nach unten. Aufgrund der schlechten Wärmeleitung der metallischer Materialien wird zum Wärmeabtransport eine Support-Struktur verwendet. Für jede Maschine und jedes Material gibt es verschiedene Parametersätze, die den maßgeblichen Energieeintrag bestimmen. Teilweise sind die Maschinen auch mit einer Bauplattformheizung ausgestattet, die Temperaturen zwischen 200° - 800° C erreicht. Gerade hohe Temperaturen werden benötigt, um bei Materialien mit hohem Kohlenstoffgehalt die Rissbildung und Porosität zu reduzieren. Bei richtiger Wahl aller Prozessparameter können Bauteile mit bis über 99,9 % Dichte gefertigt werden. Verbleibende Poren können über nachfolgende Wärmebehandlungsprozesse zum größten Teil geschlossen werden. Neben dem Begriff "SLM" für "Selective Laser Melting" werden weitere Begriffe, die ähnliche Prinzipien beschreiben, wie "DMLS" für "Direct Metal Laser Sintering", "Laser Cusing", "Laser Metal Fusion", "Direct Metal Printing", "Laser Ream Melting" und "Direct Metal Laser Melting" verwendet.

Auch gibt es bereits sogenannte "Mehrlaseranlagen", bei denen mehrere Laser beim selektiven Laserschmelzen gemeinsam ein Teil lagenweise aufbauen. Sowohl bei derartigen Mehrlaseranlagen als auch bei dem Betrieb einer Produktionslinie mit mehreren SLM-Anlagen ist die Prozess-Vergleichbarkeit und - Standardisierung hinsichtlich der verwendeten Prozess-Parameter und der daraus resultierenden Produktionsergebnisse notwendig.

Der Produktionsprozess kann mehrere Stunden oder sogar Tage dauern. Dabei ist es möglich, dass sich technische Komponenten verstellen und die Qualität des Bauteils beeinträchtigen. So kann sich beispielsweise der Laserfokus verstellen. Dies erfordert eine engmaschige Kontrolle. Allerdings ist die Vergleichbarkeit von SLM-Anlagen schwer zu gewährleisten, da zugleich mehrere Parameter Einfluss auf die Qualität des Druckerzeugnisses und somit auf die Messergebnisse haben. Auch verschiedene Hardwarekomponenten eines Druckers führen zu möglichen Abweichungen der Herstellungsqualität. So sind Drucker verschiedener Hersteller nicht mehr vergleichbar. Diese kann vielmehr nur gewährleistet werden, wenn alle relevanten Prozessparameter entweder konstant gehalten, messtechnisch erfasst oder mit Hilfe von Vergleichsmaßstäben kalibriert werden. Aus diesem Grunde müssen vorgegebene Einstellungen von Parametern auch regelmäßig kontrolliert werden.

Das erfindungsgemäße Verfahren und das zur Verfügung gestellte Gerät sollen zur Überprüfung der Laserleistung und der Positionierung dienen. Damit für alle Geräte einheitliche Überprüfungsbedingungen gelten, muss zudem ein geeignetes Kalibrierverfahren zur Verfügung gestellt werden. Dabei müssen alle Messgeräte zunächst eine Erstkalibrierung durchlaufen und sodann im eingebauten Betriebszustand ständig kontrolliert und nachkalibriert werden.

Beim Auftreffen des Laserstrahls auf das Pulverbett können beim SLM-Verfahren Partikel und Teile des bereits aufgeschmolzenen Werkstoffs weggeschleudert werden. Dieser sogenannte "Schmelzbadauswurf" kann wiederum auf dem weiter zu bearbeitenden Pulverbett landen. Wird eine solche Pulverstelle mit erhöhtem Auswurf aufgeschmolzen, kann das eigentlich aufgeschüttete Pulver zu wenig Schmelzenergie erhalten, so dass es nicht oder nicht ausreichend aufgeschmolzen wird. Der Schmelzbadeffekt hängt unter anderem auch von der belichteten Bauteilfläche, dem Material und der Schichtstärke ab. Bei einer zunehmenden Menge an Auswürfen kann es zu Anbindungsfehlern und einer Beeinträchtigung der Bauteileigenschaften kommen. Die durch das Aufschmelzen emittierte Strahlung schwächt sich in dem Moment, in dem eine Pulveranhäufung überschweißt wird, ab. Sie wird also gedämpft. Diese Rückstrahlung der Pulver- bzw. Bauteilschicht kann beispielsweise durch eine Kamera als Abbildung erfasst und mit Hilfe einer Recheneinrichtung ausgewertet werden. Dabei wird üblicherweise für jede Bauteilschicht eine separate Abbildung aufgenommen und zur Auswertung mit mathematischen Methoden ermittelt. Ein solches Verfahren wird beispielsweise in der EP 3 082 102 A1 beschrieben, wobei die Abbildung in eine Mehrzahl von Bildsegmenten unterteilt wird, da für jedes Bildsegment ein Homogenitätswert ermittelt und aufgrund der ermittelten Werte die Bauteilschicht bewertet wird. Vorgeschlagen wird dort unter anderem ein IR-sensitiver Detektor, insbesondere eine CMOs- und/oder SCMOs- und/oder CCD-Kamera zum Erfassen von IR-Strahlung.

Auch die WO 2015/169309 A1 befasst sich mit einer Thermografie zur Qualitätssicherung in einem generativen Fertigungsverfahren. Dabei erfolgt die thermografische Aufnahme mindestens eines Bildes von mindestens einem Bauteilbereich am Laserstrahl mittels mindestens eines Aufnahmesensors, wobei eine Aufnahme einer Vielzahl von Bildern in einem definierten Zeitraum erfolgt, die eine zeitliche Änderung einer Wärmeverteilung in einem schmelzbadfreien Bauteilbereich erfassen, wobei beim Auftreten mindestens eines Fehlers, wie etwa einem Riss, einem Fremdmaterial, einer Pore, einem Bindefehler oder dgl. eine charakteristische zeitliche Änderung einer Wärmeverteilung am Fehler auftritt, und wobei der zeitliche Verlauf der Wärmeverteilung und damit der Fehler mittels der dazugehörigen Aufnahme der Vielzahl von Bildern sichtbar gemacht wird. Vorgeschlagen wird insbesondere eine Fotodiodenanordnung und eine optische Scanvorrichtung zur Erfassung der Wärmeverteilung durch den Laserstrahl hindurch.

Bei einem sogenannten "Melt Pool"-Verfahren sitzt die Messdiode parallel zum Laser und misst in einem Punkt die Strahlungsenergie der Schmelze. Zur Erzeugung des Bildes werden die Koordinaten des Lasers benutzt. Dadurch können Positionsabweichungen nicht erkannt werden. Die Messdiode wandert mit dem Laser, d.h. mit dem Abtastpunkt, und es wird kontinuierlich gemessen.

Weiterhin sind im Bereich der Prozesskontrolle sogenannten "Off-Axis"- oder "On-Axis"-Anordnungen bekannt, bei denen die Überwachung der Prozessparameter entweder außerhalb des Strahlengangs oder innerhalb des Strahlengangs stattfindet.

Ein Beispiel für eine "Off-Axis"-Anordnung ist die Online-Prozesskontrolle bei der additiven Fertigung mittels Laserstrahlschmelzens der Firma MTU Aero Engines AG. Bei dieser Methode wird das Messsystem außerhalb des Strahlengangs (Off-Axis) des Lasers platziert. Dabei beobachtet das Messsystem die gesamte Baufläche oder einen Ausschnitt daraus. Dies kann beispielsweise durch hochauflösende Digitalkameras oder durch Thermografiekameras realisiert werden. Bei dem System basierend auf Digitalfotos wird die Oberfläche nach dem Schweißprozess erfasst und das entstandene Schweißbild bewertet.

Nachteilig ist dabei die geringe geometrische Auflösung heutiger Thermografiesysteme. Bei dem Verfahren zur Online-Prozesskontrolle wird die Bauplattform kontinuierlich mit einer hochauflösenden CCD- oder SCMOs-Kamera beobachtet. Die Strahlungsidentität des Schweißvorgangs wird ortsgetreu aufgezeichnet. Die mit geringer Frequenz anfallenden Einzelbilder werden miteinander verrechnet und es wird ein Auswertebild jeder gebauten Schicht erzeugt. Durch den Einsatz eines thermisch stabilisierten Kamerasystems wird die quantitative Bewertung der Strahlungsintensitäten ermöglicht. Steuersignale werden durch angepasste spektrale Filter unterdrückt, so dass eine Korrelation der optischen Thermografiesignale (OT-Signale) zur Qualität des Schweißprozesses und damit zu potentiellen Fehlern im Bauteil ermöglicht wird. Das beschriebene System erzeugt Schichtbilder durch Integration vieler Einzelaufnahmen und arbeitet individuell in jeder eingebauten Maschine. Konzipiert ist es für Einlaseranlagen.

Im Stand der Technik ist ebenfalls eine Fehlstellenbestimmung mittels IR-Strahlung beim Aufbau dreidimensionaler Objekte bekannt. Eine detaillierte Beschreibung der In-Prozess-Überwachung zur Qualitätssicherung durch Thermografie findet sich zudem in einer Dissertation der Technischen Universität München. In dieser wird die Vergleichbarkeit von Prozessen anhand thermischer Profile (2D und 3D) beschrieben. Diese werden in einem Toleranzbandverfahren als Vergleichsgrundlage für geometrisch identische Bauteile, die z.B. auf unterschiedlichen Produktionsanlagen, mit unterschiedlichen Prozessparametern oder unter unterschiedlichen Prozessrandbedingungen gefertigt wurden und entsprechend andere Qualitätsausprägungen aufweisen können, verwendet.

### https://www.iwb.mw.tum.de/fileadmin/w00bwm/www/institut/dissertationen/32 5 krauss harald.pdf

In der weiteren DE 10 2007 056 984 A1 (Mattes, Philippi) wird ein Verfahren zum Herstellen eines dreidimensionalen Objektes beschrieben, bei dem das Objekt durch schichtweises Verfestigen eines pulverförmigen Materials an den dem Objekt entsprechenden Stellen der jeweiligen Schicht gebildet wird, wobei ortsaufgelöst die von einer aufgetragenen Pulverschrift ausgehende IR-Strahlung erfasst wird, so dass ein IR-Strahlungsbild erhalten wird, das sich dadurch auszeichnet, dass anhand des IR-Strahlungsbildes Fehlstellen und/oder geometrische Unebenheiten der aufgetragenen Pulverschicht bestimmt werden.

Auch das Konzept der "On-Axis"-Laserleistungsmessung ist bereits bekannt:

### http://ant.vdma.org/documents/266687/3062538/3D VDMA 22.1.14 SMLSolut ions Schwarze.pdf/0766bf8e-41f8-4b0c-bf18-41154863039d

Darüber hinaus gibt es Produkte zur Überwachung von Strahlparametern in Laseranlagen. Dabei geht es unter anderem um die Messung der Leistungsdichteverteilung, Strahlabmessung, Orientierung des Strahls sowie um Fokusabmessung, Fokuslage im Raum, Beugungsmaßzahl, Rayleigh-Länge, Fernfelddivergenz für die Qualitätssicherung und Abnahme.

### https://www.primes.de/de/produkte/anlagenintegrierbare-sensoren/microspot-monitor-compact-msm-c.html

Der Stand der Technik der Positionskalibrierung von SLM-, SLS- oder Scan-Anlagen beschränkt sich bisher auf die Erzeugung von Linienmustern oder Scangittern, die temporär auf der Baufeldoberfläche unter Verwendung einer Kalibrierplatte zu Abgleichzwecken aufgebracht werden. Sie dienen lediglich zur räumlichen Kalibrierung des Laserstrahls. Ein solches Verfahren ist etwa aus der DE 10 2016 106 403 A als auch aus der WO 2017/174226 A1 bekannt.

Bei allen im Stand der Technik bekannten Verfahren und Vorrichtungen ist die Vergleichbarkeit bzw. Standardisierung von SLM-Anlagen nur schwer zu gewährleisten, da mehrere Parameter einen Einfluss auf die Qualität des Bauteils und die Messergebnisse haben.

So misst die Kamera regelmäßig ein elektromagnetisches Spektrum von 400 bis 1.000 nm, also im sichtbaren Bereich bzw. Intensitäten in diesem Bereich, und darüber hinaus die Wärmestrahlung im Nahinfrarotbereich. Im Strahlengang zwischen Detektor und Prüffläche befinden sich eine Optik und diverse Filter. Die Kamera ist fest eingebaut, so dass sich zwischen Prüffläche und Detektorfläche geometrische Abhängigkeiten ergeben. Die Hardwarekomponenten führen zu einer Reihe möglicher Abweichungen bei Verwendung mehrerer Systeme. Sie sind also von Fall zu Fall anders, so dass sie sich nicht mehr vergleichen lassen. Dieser Abweichungen betreffen z.B. den Detektor mit Folgen für die Signalstabilität der Kamera und des Dunkelbildes und einer damit verbundenen Intensitätsänderung. Eine Intensitätsänderung rührt auch aus dem optischen Gesamtsystem und der Kalibrierung der Strahlungsintensität, aus dem Objektiv und dem damit verbundenem Shading.

Schließlich besteht auch eine nicht unerhebliche Einbauabhängigkeit und damit verbundene Geometriekorrektur, die zu falschen Positionen führen kann.

Vom Schweiß-Prozess bzw. von der SLM-Anlage selbst bestimmte Abweichungsfaktoren, sind z.B. die Laserleistung und die Lasergeschwindigkeit, das verwendete Schutzgas, die Plasmastrahlung, die Pulverdicke, evtl. Pulververunreinigungen, das Pulvermaterial an sich sowie eine etwa vorhandene Innen- und Außenbeleuchtung, die jeweils zu Intensitätsänderungen führen können, während der Laserfokus und der Laserscanner zu einer falschen Positionierung führen können.

Eine Vergleichbarkeit verschiedener Systemen kann daher nur gewährleistet werden, wenn alle genannten Paramatern entweder konstant gehalten, messtechnisch erfasst oder mit Hilfe von Vergleichsmaßstäben kalibriert werden. Dies ist nach dem Stand der Technik bisher nicht der Fall und führt zu großen Herstellungsproblemen.

Bei einem derzeit üblichen Kalibrierverfahren handelt es sich um einen sogenannten "Einpunktabgleich". Die Kamera bzw. das Ersatzsystem werden über einen einzigen Messpunkt, beispielsweise bei 1.000° C kalibriert. Aus dem Soll-Ist-Vergleich ergibt sich eine Kalibriergerade. Bei einem Schweißprozess können allerdings Temperaturen in einer sehr großen Spanne auftreten. Insbesondere kann sich die Sensorempfindlichkeit in einem Temperaturbereich von 800° - 900° C sehr von dem in einem Bereich zwischen 1.200° - 1.300° C unterscheiden. Das reale Gesamtsystem hat dabei eine potentielle Kennlinie und keine lineare Kennlinie (Strahlung vs. Temperatur). Zudem wird bislang nicht die Detektorcharakteristik abgebildet, sondern nur die Intensität bei einer Temperatur. Die sogenannte "Einpunktabgleich"-Methode und die damit erzeugte lineare Kennlinie führt daher zu erheblichen Fehlern und gestattet keinerlei Vergleichbarkeit bzw. Standardisierung.

Aufgabe der Erfindung ist es, eine Lösung zu schaffen, um die Qualitätssicherheit und den Fertigungsprozess von additiv gefertigten metallischen Bauteilen zu verbessern, insbesondere eine Anlagenvergleichbarkeit und Standardisierung zu erlauben.

Diese Aufgabe wird erfindungsgemäß dadurch gelöst, dass unter Einsatz einer zu einem Messsystem umgebauten CCD-Kamera, bei der nur der Nahinfrarotbereich genutzt wird, und die eine Langzeitbelichtungsfunktion aufweist, innerhalb eines Temperaturbereichs von 800° C - 1.500° C die Kennlinie an einem schwarzen Strahler erfasst wird.

Grundbedingung für die Kalibrierung ist der Einsatz einer hochauflösenden optischen CCD-Kamera. Diese muss zunächst in ein Messsystem umgebaut werden, um bestimmtes Prozessleuchten, wie zum Beispiel die Plasmastrahlung im Bereich zwischen 400 nm und 600 nm auszufiltern. Genutzt wird idealerweise nur der Nahinfrarotbereich des Sensors.

Ferner muss die Kamera die Funktion der Langzeitbelichtung aufweisen.

Zur Kalibrierung wird ein schwarzer Strahler benötigt. Hierzu wird bei jeder Kamera innerhalb eines festgelegten Termperaturbereichs von 800° C - 1.500° C die Kennlinie am schwarzen Strahler erfasst. Damit kann jedes Kamerasystem standardisiert werden, so dass es vergleichbar ist und dieselbe Strahlungsleistung misst. Im angegebenen Temperaturbereich werden die gemessenen Grauwerte bei verschiedenen Belichtungszeiten und Filterwerten ermittelt. Dabei erweist sich, dass alle Veränderungen im Strahlengang, wie beispielsweise Bandpassfilter, Graufilter, Laserschussgläser und dergleichen oder Veränderungen der Belichtungszeit, zwar die gemessenen Intensitäten (Grauwerte) verändern, nicht aber die Charakteristik der Temperaturabhängigkeit. Aus diesem Grund erfolgt eine Normierung auf den höchsten gemessenen Wert. Das bedeutet im Ergebnis, dass die normierte Kennlinie zwischen den Werten "0" und "1" verläuft.

Um die Messwerte der Kamera bei Temperaturen zwischen 800° C und 1.500° C bei einer definierten Belichtungszeit, beispielsweise 100 ms, an dem schwarzen Strahler aufzunehmen, wird die Kamera zunächst in einem definierten Abstand zur Öffnung des schwarzen Strahlers montiert und dem Strahlungsspektrum ausgesetzt.

Um den gesamten Temperaturbereich detektieren zu können, müssen zuvor noch geeignete Dämpfungsfilter auf das Objektiv geschraubt werden. Danach werden einige Stützwerte, zum Beispiel alle 100° C, ermittelt und in einer Tabelle registriert. Die gesamte aufgenommene Kurve wird dann durch den Maximalwert dividiert und normiert. Diese Kurve weist den potenziellen Charakter der Form y= ax^{b} auf und läuft zwischen den Werten "0" und "1".

An Stelle des schwarzen Strahlers kann auch eine Halogenlampe verwendet werden, deren Helligkeit solange verändert wird, bis die gemessene Strahlung der des schwarzen Strahlers entspricht. Zur Veränderung der Lichtqualität der Lampe kann die Stromstärke mit einem kalibrierten Stromnetzteil erfasst und eingestellt werden, das seinerseits geeicht und regelmäßig kalibriert wird. Da im späteren Betrieb kein schwarzer Strahler zur Überprüfung der Messmittel eingesetzt werden kann - diese sind gegen Erschütterungen äußerst empfindlich und daher nur ortsfest zu verwenden - muss die Überprüfung an einem Ersatzsystem stattfinden. Dieses besteht aus einer Halogenlampe, vorzugsweise einer Ulbricht-Kugel, die über einen längeren Zeitraum (mindestens 200 Stunden) eine gleichbehaltende Helligkeit garantiert. Innerhalb dieser Garantiezeit darf die Halogenlampe zur Kalibrierung eine Kamera benutzt werden. Bei einer Ulbricht-Kugel handelt es sich um eine kalibrierte Lichtquelle, die eine konstante homogene Lichtfläche aufweist. Diese wird als Lichtquelle eingesetzt, um diffuse Strahlung aus gerichteter Strahlung zu erreichen. Die Ulbricht-Kugel ist eine innen diffus reflektierende Hohlkugel, in deren Oberfläche sich im rechten Winkel zu einer Lichteintrittsöffnung eine Austrittsöffnung befindet. Vor der Lichteintrittsöffnung befindet sich die Licht- bzw. Strahlungsquelle. Die Innenbeschichtung besteht aus möglichst gut diffus reflektierenden Materialien. Die Ulbricht-Kugel dient dazu, den ursprünglich ungleichförmig verteilten Lichtstrom aus allen Richtungen zu sammeln und in eine einfach messbare, mit dem gesuchten Lichtstrom in einfachem Zusammenhang stehende Beleuchtungsstärke zu setzen. Sie eignet sich damit zur Kalibrierung und wird typischer Weise in der optischen Messtechnik eingesetzt und ermöglicht einerseits, die Leistung oder den Gesamtlichtstrom verschiedener Lichtquellen zu vermessen, andererseits bietet die erzeugte diffuse Strahlung die Möglichkeit, ein fotometrisches Normal bzw. eine Referenzstrahlungsquelle zu schaffen, um die Eigenschaften verschiedener optischer Detektoren miteinander zu vergleichen.

Um das Kalibrierverfahren mit der Ulbricht-Kugel verbinden zu können, wird zunächst in einem Zwischenschritt das Verhältnis von der verwendeten Ulbricht-Kugelabstrahlung und der maximalen Schwarzstrahlung von 1.500° C bestimmt, um einen Bezug auf den maximalen Wert der Normierung zu erhalten.

Um die Messanordnung in einer selektiven Laserschmelzanlage zu kalibrieren, wird zunächst die Halogenlampe oder die kalibrierte Ulbricht-Kugel auf der Bauplatte positioniert und die Abstrahlung mit dem Kamerasystem der Maschine gemessen. Mit dem gemessenen Grauwert wird nun die ursprüngliche normierte Kurve multipliziert, da das CCD-System tatsächlich keine Werte zwischen "0" und "1" erfasst, sondern sog. 16 Bit-Werte. Diese Werte werden dann in sog. "Temperaturen" hochgerechnet. Dabei handelt sich in Wirklichkeit nicht um echte Temperaturen. Vielmehr bewegt sich der Laserstrahl mit hoher Geschwindigkeit über die Bauplatte und die Belichtungszeit pro Pixel ist daher wesentlich geringer als bei der Erfassung am schwarzen Strahler. Dies ist aber nicht von Bedeutung, da es bei dem erfindungsgemäßen Verfahren um die Vergleichbarkeit mehrerer Laserschmelzverfahren geht, und nicht um die wahre Temperatur. Vielmehr wird mit dem Messsystem registriert, dass zum Beispiel die Lasergeschwindigkeiten unterschiedlich sind.

Außerdem kann auch noch eine sog. Shading-Korrektur erforderlich sein, wenn der Abbildungsmaßstab des Objektivs nicht dem des Detektoren betrifft. In diesem Fall wird die Ausleuchtung fehlerhaft, so dass eine Korrektur erfolgen muss. Dabei wird die Ulbricht-Kugel in einem Raster von links oben nach rechts unten im Kamerabild verfahren. An jeder Position wird ein Messwert der kalibrierten Strahlungsquelle erfasst. Der höchste Intensitätswert wird in der Mitte ausgelesen. Alle erfassten Messwerte werden durch den Maximalwert dividiert, so dass ein normiertes Shading-Bild entsteht. Alle später in der Laserschmelzanlage aufgenommenen Messbilder werden mit diesem Shading-Bild dividiert und somit korrigiert.

Weiterhin ist eine Geometriekorrektur erforderlich, da die CCD-Kamera aufgrund der Einbauposition und ggf. auch durch optische Verzerrung des Objektivs räumlich verzerrte Bilder liefert. Die Korrektur erfolgt durch das Einlegen einer Lochplatte mit definierten Lochdurchmessern und -abständen. Die Verzerrung wird durch einen nichtlinearen Algorithmus in ein rechtwinkliges Gitter mit konstanten Lochabständen umgerechnet. Bei der späteren Erfassung der Messbilder wird jedes Bild nach der Shading-Korrektur auch geometrisch korrigiert.

Aufgrund des Bohrlochdurchmessers und der Einbauverhältnisse an SLM-Anlagen sind Einschränkungen des Objektivdurchmessers erforderlich. Dies führt dazu, dass der Sensor nicht hundertprozentig gleichmäßig belichtet wird. Bei einer homogenen Ausleuchtung führt dieser Shading-Effekt zu Abschattungen im Randbereich. Diese können am Rand bis zu einer 50 prozentigen Reduktion des Grauwertes führen, was die Kalibrierung zunichtemachen würde. Deshalb bedarf es entsprechender Korrekturmaßnahmen. Entweder muss das Bohrloch am Maschinengehäuse vergrößert werden, oder es erfolgt eine Korrektur des Shading-Wertes für die Kamera-Objektiv-Einheit. Zur Bestimmung des Korrekturwertes ist eine homogene Ausleuchtung der Betrachtungsfläche notwendig. Hierzu kann eine Ulbricht-Kugel an verschiedenen Positionen gemessen werden. Abweichungen am Bildrand können dann durch eine Normierung auf den Bildmittenbereich korrigiert werden.

Durch den Einbau der CCD-Kamera und durch die Verwendung eines Objektivs wird auch das Blickfeld (Field of view) verzerrt dargestellt. Dann ist eine genaue Positionsangabe nicht mehr möglich, und unterscheidet sich auch von SLM- zu SLM-Anlage. Zur Übertragbarkeit und Vergleichbarkeit der Bauplattform muss ein aufgenommenes Bild zunächst auch geometrisch kalibriert werden. Bei einer üblichen Bauplattform mit einer Größe von 20 x 20 cm ist die CCD-Kamera schräg auf dieses Quadrat ausgerichtet, so dass eine trapezförmige Ansicht aufgenommen wird. Daher muss auch dieses Bild rechnerisch korrigiert werden, und zwar durch ein bildfüllendes Lochraster.

Danach ist das CCD-Kamerasystem sowohl radiometrisch als auch optisch und geometrisch kalibriert.

Als nächstes muss das Maschinenkoordinatensystem als Referenz erfasst werden, um spätere Abweichungen festzustellen. Dazu wird mit dem Laser bspw. ein definiertes Muster auf einer Blechplatte erzeugt und mit dem Messsystem erfasst und abgespeichert. Weist die Anlage ein sog. Mehrlasersystem auf, können bei diesem Vorgang schon erste Abweichungen einzelner Laserpositionen festgestellt werden.

Während eines Herstellungsprozesses können nun die x-y-Positionen der tatsächlichen Kontur (Ist-Wert) mit den vorgegebenen Soll-Werten verglichen und Positionsabweichungen sofort erkannt werden.

Die Strahlungsreferenz kann entweder im Pulverbett oder auch mit Blechen, die eine definierte Oberfläche haben, ermittelt werden. Dabei wird der Laser mit geringer Energie über das Pulver oder die Platte verfahren und hinterlässt bei der Messung ein Strahlungsprofil. Mit dem kalibrierten Messsystem kann dieses Profil regelmäßig kalibriert werden. Ebenso können mit diesem erfindungsgemäßen Messsystem unterschiedliche Maschinen verglichen und eingestellt werden, damit sie stets identische Ergebnisse liefern.

Die Erfindung ist nachstehend anhand der Zeichnung beispielhaft näher erläutert. Diese zeigt in
- Fig. 1: eine Kamerakennlinie, erfasst am schwarzen Strahler,
- Fig. 2: eine Kamerakennlinie normiert,
- Fig. 3: eine Laser mit Kamerasystem sowie Bauplatte und Kalibrier-/ Positionskontrolle,
- Fig. 4: eine Ulbricht-Kugel bzw. Halogenlampe als Ersatzschwarzstrahler mit Bauplatte,
- Fig. 5: eine Tabelle mit Kameramesswerten
- Fig. 6: mehrere Kurvenverläufe für Messwerte gemäß Fig. 5,
- Fig. 7: eine Strahlungsmatrix für eine Shading-Korrektur,
- Fig. 8: eine Geometriekorrektur an einer Lochplatte.

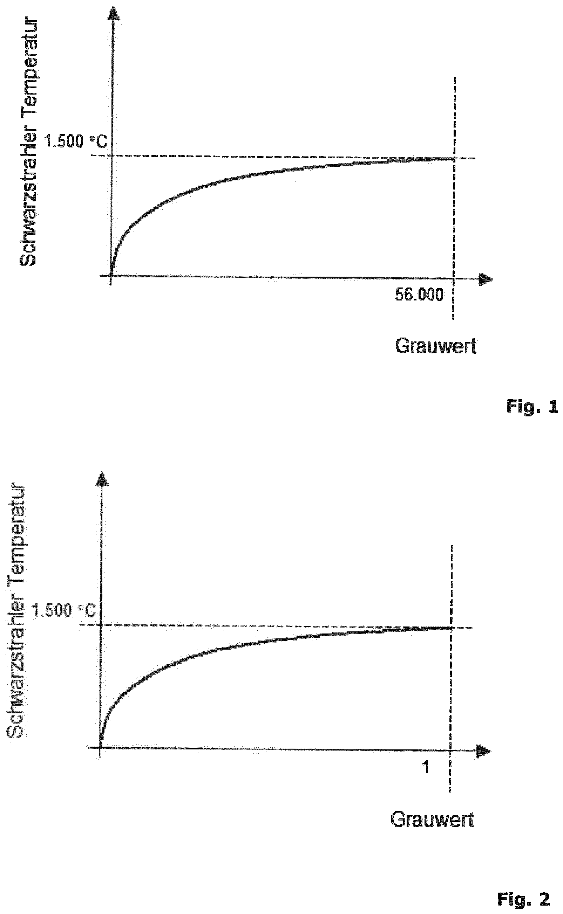

Figur 1 zeigt die Kamerakennlinie erfasst am schwarzen Strahler, während Figur 2 die Kamerakennlinie normiert zeigt.

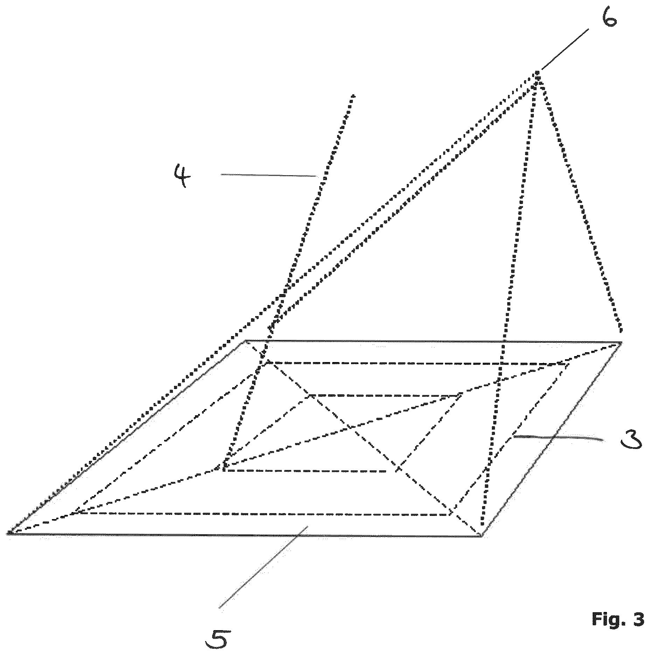

Figur 3 zeigt einen Laser 3 sowie das Kamerasystem 4 gerichtet auf eine Bauplatte 5 mit einer Kalibrier-/Positionskontrolle 6.

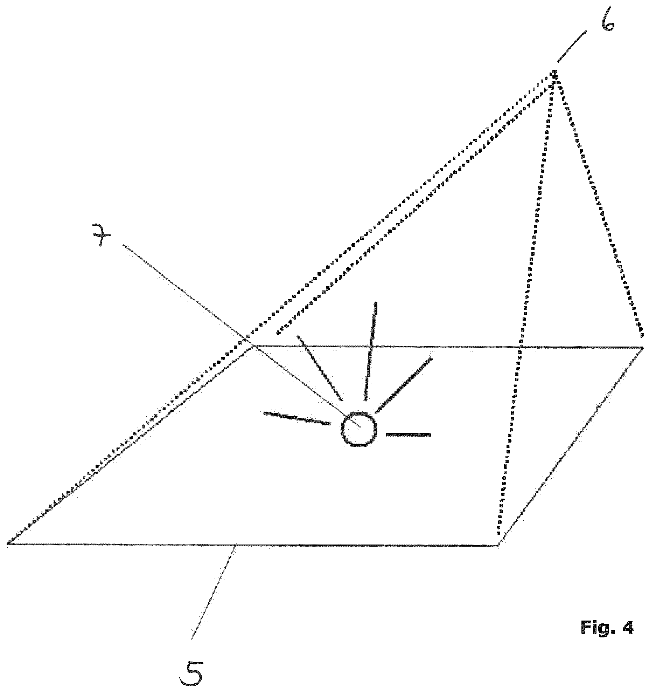

Figur 4 zeigt die Ulbricht-Kugel 7, an deren Stelle auch eine Halogenlampe als Ersatzschwarzstrahler treten kann, wiederum mit einer Bauplatte 5.

Figuren 1 und 2 zeigen die Kamerakennlinie 1 bzw. 2. In Figur 1 ist diese am schwarzen Strahler erfasst, und zwar wird bei jeder Kamera die Kennlinie innerhalb eines festgelegten Temperaturbereichs von 800° C - 1500° C erfasst. Damit wird jedes Kamerasystem vergleichbar bzw. standardisiert.

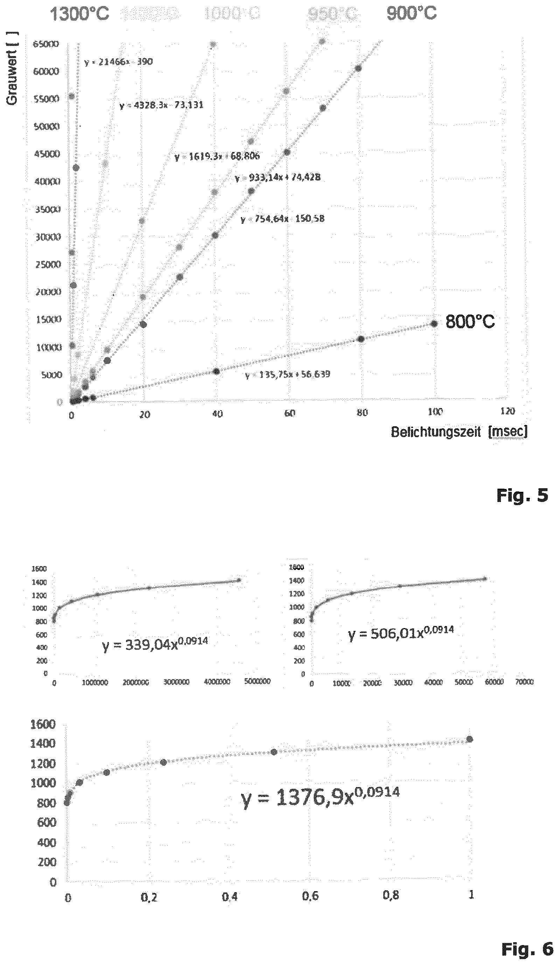

Figur 2 zeigt die normierte Kamerakennlinie 2. Dabei wird für jeden Temperaturbereich der gemessene Grauwert bei verschiedenen Belichtungszeiten und Filterwerten ermittelt, wie aus der weiteren Figur 5 hervorgeht. Dabei zeigt sich, dass alle Veränderungen im Strahlengang beispielsweise durch Einbau von Bandpassfiltern, Graufiltern, Laserschutzgläsern und dergleichen, oder auch Veränderungen der Belichtungszeit zwar die gemessenen Identitäten und damit die Grau-Werte verändern, nicht aber die Charakteristik der Temperaturabhängigkeit. Deshalb erfolgt eine Normierung auf den höchsten gemessenen Wert. Im Ergebnis bedeutet dies, dass die normierte Kennlinie zwischen den Werten 0 und 1 verläuft (Figur 2 und Figur 6). Da im Realbetrieb kein schwarzer Strahler zur Messmittel-Überprüfung eingesetzt werden kann (derartige schwarze Strahler sind äußerst erschütterungsanfällig und können daher nicht transportiert werden), muss die Überprüfung an einem Ersatzsystem erfolgen. Dieses besteht aus einer Halogenlampe 7, insbesondere aber einer Ulbricht-Kugel 7 (siehe Figur 4). Diese garantiert über einen Zeitraum von mindestens 200 Stunden eine gleichbleibende Helligkeit und darf während des angegebenen Zeitraums zur Kalibrierung der Kamera bzw. des Kamerasystems benutzt werden.

Bei der Ulbricht-Kugel 7 handelt es sich um eine kalibrierte Lichtquelle, die eine konstante homogene Lichtfläche mit einem Durchmesser von etwa 2 cm aufweist.

Vor der Messung muss das Verhältnis der verwendeten Ulbricht-Kugel-Abstrahlung mit der maximalen Schwarzstrahlung von 1500° C bestimmt werden, damit es einen Bezug auf den Maximalwert der Normierung gibt.

Bei Verwendung einer hochwertigen Halogenlampe anstelle einer Ulbricht-Kugel 7 wird die Helligkeit der Lampe solange verändert, bis die gemessene Strahlung der des schwarzen Strahlers 1500° C entspricht. Dazu wird die Stromstärke mit einem kalibrierten Stromnetzteil erfasst und auch später eingestellt, um dieselbe Leuchtstärke bei der Kalibrierung zu erzielen. Auch das Netzteil muss selbst geeicht sein und regelmäßig kalibriert werden. Bei Einhaltung dieser Voraussetzungen kann eine kalibrierte Ersatzstrahlungsquelle, wie die beschriebene Halogenlampe statt der Ulbricht-Kugel 7, zum Kalibrieren der Messanordnung benutzt werden. In der Praxis ist eine regelmäßige Überprüfung und Nachkalibrierung der Ersatzstrahlungsquelle sicher zu stellen.

Insbesondere gilt es aber im Einsatz einer Halogenlampe statt einer Ulbricht-Kugel 7 zu beachten, dass die Übertragbarkeit der Ergebnisse vom schwarzen Strahler und Halogenlampe fehleranfällig ist. Dies liegt daran, dass der schwarze Strahler eine Fläche aufweist, die Halogenlampe hingegen eine kleine Wendel, die aus einer gewissen Distanz abgelichtet wird. Hierdurch können Messfehler auftreten.

Figur 3 zeigt die Kalibrierung der Messanordnung in der Maschine.

Die kalibrierte Ulbricht-Kugel 7 bzw. Halogenlampe wird auf die mit einem Raster 3 versehene Bauplatte 5 positioniert und die Abstrahlung mit dem Kameramesssystem 4 der Maschine gemessen. Mit dem gemessenen Grauwert wird nun die ursprüngliche normierte Kurve 2 multipliziert, da das Kamerasystem keine Werte zwischen 0 und 1 erfasst, sondern 16-Bit-Werte. Diese Werte werden dann in sogenannte "Temperaturen" umgerechnet, obwohl die Messwerte tatsächlich keine Temperaturen darstellen.

Der Laserstrahl 4 bewegt sich hierbei mit hoher Geschwindigkeit über die mit einem Raster 3 versehene Bauplatte 5. Die Belichtungszeit pro Pixel ist damit wesentlich geringer als mit der Erfassung am schwarzen Strahler. Das ist aber für den verfolgten Zweck unschädlich, da nicht die Temperatur, sondern die Vergleichbarkeit einer Anlage zur anderen das Ziel der Messung ist. Wenn hier zum Beispiel unterschiedliche Lasergeschwindigkeiten auftreten, wird dies mit dem vorgeschlagenem Messsystem detektiert.

Zu beachten ist weiter, dass alle Komponenten im Strahlengang konstant sein müssen. Dies erfordert eine genaue Überprüfung und Justierung aller eingesetzten Graufilter und optischen Medien, wie Bandpassfilter, Objektive und Fenster. Es reicht nicht aus, sich auf die Herstellerqualitätsangaben der jeweiligen Hersteller zu verlassen.

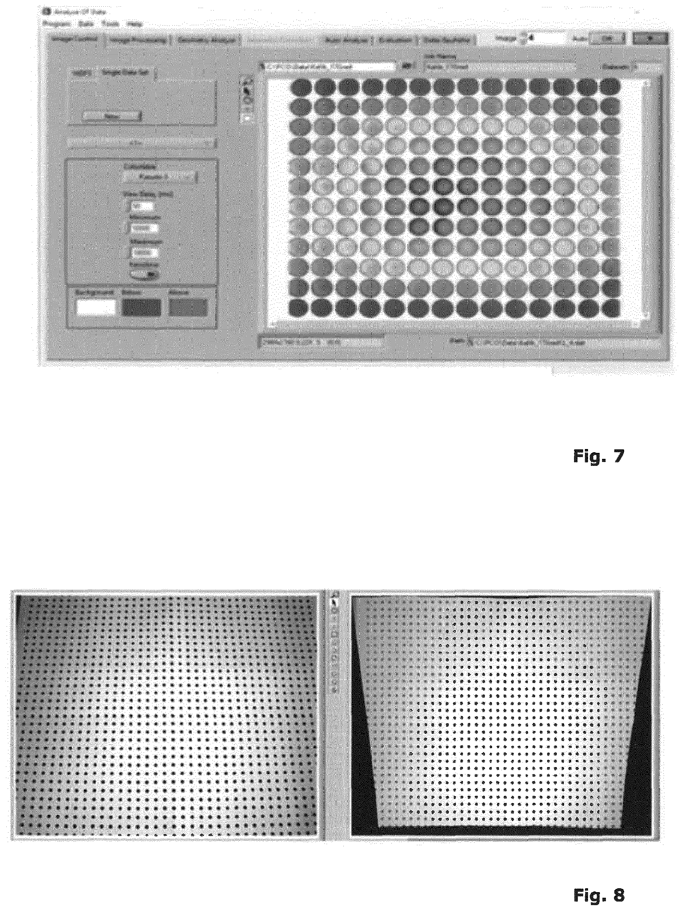

In der Praxis müssen auch weitere Störeffekte, wie das Shading und die Geometrie korrigiert werden. Aufgrund des Bohrlochdurchmessers und der Einbauverhältnisse einer SLM-Anlage sind Einschränkungen des Objektivdurchmessers erforderlich. Das führt dazu, dass der Detektor nicht hundertprozentig gleichmäßig belichtet wird. Bei einer homogenen Auslichtung führt der dadurch hervorgerufene Shading-Effekt zu Abschattungen in Randbereichen, wie in Figur 7 dargestellt. Derartige Abschattungen können am Rand sogar bis zu einer 50-prozentigen Reduzierung des Grauwerts führen. Ein solcher Effekt macht die Kalibrierung zunichte. Hiergegen können zwei Maßnahmen ergriffen werden. Entweder wird das Bohrloch am Maschinengehäuse vergrößert, oder der Shading-Wert der Kameraobjektiveinheit wird korrigiert. Aufgrund der genormten Gehäusemaße bzw. Fertigungstoleranzen ist eine Übertragbarkeit von System zu System unproblematisch.

Bei der erwähnten Shading-Korrektur wird die Ulbricht-Kugel 7 in einem Raster von links oben nach rechts unten im Kamerabild verfahren. An jeder Position wird ein Messwert der kalibrierten Strahlungsquelle erfasst. Der höchste Intensitätswert wird in der Mitte ausgelesen. Alle erfassten Messwerte werden durch den Maximalwert dividiert, so dass ein normiertes Shading-Bild entsteht. Alle später in der Maschine aufgenommenen Messbilder werden mit diesem Shading-Bild dividiert und somit korrigiert.

Zur Bestimmung des Korrekturwertes ist eine homogene Ausleuchtung der Betrachtungsfläche erforderlich. Hierzu kann eine Ulbricht-Kugel 7 an verschiedenen Positionen gemessen werden. Abweichungen am Bildrand können dann durch eine Normierung auf den Bildmittenbereich korrigiert werden. Dadurch ist eine Übertragbarkeit auf verschiedene Kamera-/Objektivvarianten gewährleistet. Weiterhin wird durch den Einbau der Kamera und durch die Verwendung eines Objektivs das Versuchsfeld (field of view) verzerrt dargestellt. Da dann eine genaue Positionsangabe nicht mehr möglich und auch von Anlage zu Anlage unterschiedlich ist, muss zur Übertragbarkeit und Vergleichbarkeit der Bauplattform jedes aufgenommene Bild geometrisch kalibriert werden, wie aus Figur 8 hervorgeht. Diese zeigt eine übliche Bauplattform 5 mit einer Größe von etwa 20 x 20 cm. Die Kamera ist schräg auf dieses Quadrat gerichtet, was zunächst zu einer trapezförmigen Ansicht führt. Für die rechnerische Korrektur dieses Bildes wird ein Lochraster 8 verwendet, das bildfüllend sein muss.

Die Lochplatte 8 weist definierte Lochdurchmesser und Abstände auf. Die Verzerrung wird durch einen nichtlinearen Algorithmus in ein rechtwinkliges Gitter mit konstanten Lochabständen umgerechnet. Bei der späteren Erfassung der Messbilder wird jedes Bild nach der Shading-Korrektur auch geometrisch korrigiert.

Nach Durchführung aller beschriebenen Maßnahmen ist das jeweilige Kamerasystem 6 radiometrisch, optisch und geometrisch kalibriert. Anschließend muss das Maschinenkoordinatensystem als Referenz erfasst werden, um spätere Abweichungen festzustellen. Dazu wird mit dem Laser 4 zum Beispiel ein definiertes Muster auf einer Blechplatte 5 erzeugt und mit dem Messsystem erfasst und abgespeichert. Weist die Anlage ein Mehrlasersystem auf, können bei diesem Vorgang bereits Abweichungen einzelner Laserpositionen festgestellt werden.

Während eines Herstellungsprozesses können nun die x- und y-Positionen der tatsächlichen Kontur mit den Soll-Werten verglichen und Positionsabweichungen sofort erkannt werden. Die Strahlungsreferenz kann entweder im Pulverbett oder auch mit Blechen ermittelt werden, die eine definierte Oberfläche aufweisen. Der Laser 4 wird mit geringer Energie über das Pulver oder die Platte verfahren und hinterlässt bei der Messung ein Strahlungsprofil. Mit einem kalibrierten Messsystem kann dieses Profil täglich kontrolliert werden. Ebenso können mit dem kalibrierten Messsystem unterschiedliche Maschinen verglichen und eingestellt werden, damit sie identische Ergebnisse liefern.

Als erster Schritt erfolgt der Kalibriervorgang der Systemkamera 6. Dabei werden die Messwerte der Kamera bei Temperaturen zwischen 800° C und 1500° C bei einer definierten Belichtungszeit, zum Beispiel 100 ms, am schwarzen Strahler aufgenommen. Dazu wird die Kamera 6 in einem definierten Abstand zur Öffnung des schwarzen Strahlers montiert und dem Strahlungsspektrum ausgesetzt. Um den gesamten Temperaturbereich detektieren zu können, müssen zuvor geeignete Dämpfungsfilter auf das Objektiv aufgesetzt werden. Anschließend werden einige Stützwerte, zum Beispiel alle 100° C, ermittelt und in einer Excel-Tabelle registriert. Die gesamte aufgenommene Kurve wird dann durch den Maximalwert dividiert und normiert. Diese Kurve hat potenziellen Charakter der Form y=ax^{b}, und läuft zwischen den bereits beschriebenen Werten 0 und 1.

Eine kalibrierte Ulbricht-Kugel 7 wird einer Vergleichsmessung, zum Beispiel bei 1500° C am schwarzen Strahler unterzogen, um das Strahlungsverhältnis zu ermitteln. Hierdurch wird erreicht, dass eine Ersatzstrahlungsquelle 7 für die maximale Temperatur der Erstkalibrierung, wie zuvor beschrieben, definiert wird.

Anstelle der Ulbricht-Kugel 7 kann auch eine hochwertige Halogenlampe verwendet werden. Diese sollte eine möglichst großflächige Wendel haben, auf die die Kamera 6 schaut. Die Helligkeit wird mit einem kalibrierten Stromnetzteil solange verstellt, bis der Strahlungswert an der Wendel den gleichen Meßwert aufweist, wie bei einer fest eingestellten Temperatur am schwarzen Strahler (1500° C). Anschließend wird die Ersatzstrahlungsquelle 7 in der Maschine positioniert. Der Strahlungswert von 1500° C wird mit der Systemkamera 6 (100 ms) erfasst. Der gemessene Maximalwert ist Multiplikator der normierten Kurve 2 aus dem ersten Schritt.

Natürlich ist die Erfindung nicht auf die dargestellten Ausführungsbeispiele beschränkt. Weitere Ausgestaltungen sind möglich, ohne den Grundgedanken zu verlassen.

### Bezugszeichenliste:

- 1: Kamerakennlinie, an schwarzem Strahler
- 2: Kamerakennlinie, normiert
- 3: Raster
- 4: Laserstrahl
- 5: Bauplatte
- 6: Kamerasystem
- 7: Ulbricht-Kugel
- 8: Lochraster

## Patentansprüche

1. Kalibrierverfahren zur Vergleichbarkeit und Standardisierung von selektiven Laserschmelzanlagen,
**dadurch gekennzeichnet,**
**dass** unter Einsatz einer zu einem Messsystem umgebauten CCD-Kamera (6), bei der nur der Nahinfrarotbereich genutzt wird, mit Langzeitbelichtungsfunktion innerhalb eines Temperaturbereichs von 800° - 1.500° C die Kennlinie (1) an einem schwarzen Strahler erfasst wird.

2. Kalibrierverfahren nach Anspruch 1,
**dadurch gekennzeichnet,**
**dass** für den Temperaturbereich die gemessenen Grauwerte bei verschiedenen Belichtungszeiten und Grauwerten ermittelt werden und eine Normierung auf den höchsten Messwert vorgenommen wird.

3. Kalibrierverfahren nach Anspruch 1 oder 2,
**dadurch gekennzeichnet,**
**dass** an Stelle des schwarzen Strahlers eine Halogenlampe (7) verwendet wird, deren Helligkeit so lang verändert wird, bis die gemessene Strahlung der des schwarzen Strahlers entspricht.

4. Kalibrierverfahren nach Anspruch 3,
**dadurch gekennzeichnet,**
**dass** zur Veränderung der Helligkeit der Halogenlampe die Stromstärke mit einem kalibrierten Stromnetzteil erfasst und eingestellt wird, das seinerseits geeicht und regelmäßig kalibriert wird.

5. Kalibrierverfahren nach Anspruch 4,
**dadurch gekennzeichnet,**
**dass** an Stelle der Halogenlampe (7) eine Ulbricht-Kugel (7) verwendet wird, wobei in einem Zwischenschritt das Verhältnis von der verwendeten Ulbricht-Kugel-Abstrahlung und der maximalen Schwarz-Strahlung von 1.500° C bestimmt wird, um einen Bezug auf den Maximalwert der Normierung zu erhalten.

6. Kalibrierverfahren nach Anspruch 5,
**dadurch gekennzeichnet,**
**dass** die kalibrierte Halogenlampe (7) oder Ulbricht-Kugel (7) auf der Bauplatte (5) der SLM-Anlagen positioniert und die Abstrahlung mit der CCD-Kamera (6) gemessen und mit dem gemessenen Grauwert die ursprünglich normierte Kurve (2) multipliziert und die erhaltenen Werte in "Temperaturen" umgerechnet werden.
